# EUROPEAN PATENT SPECIFICATION

(11) **EP 2 779 821 B1**
(45) Date of publication and mention of the grant of the patent: **11.01.2017**
(21) Application number: 12801474.3
(22) Date of filing: 16.11.2012
(51) Int. Cl.: A01G 9/02, A01G 9/10

(54) **CONTAINER FOR PLANTS**
BEHÄLTER FÜR PFLANZEN
CONTENEUR POUR PLANTES

(30) Priority: 18.11.2011 IT BO20110097; 23.03.2012 IT FE20120003
(43) Date of publication of application: 24.09.2014
(73) Proprietor: Mannoni, Giorgio, 44124 Ferrara (IT)
(72) Inventor: Mannoni, Giorgio, 44124 Ferrara (IT)
(74) Representative: Manzella & Associati
(86) International application number: PCT/EP2012/072911
(87) International publication number: WO 2013/072497

(56) References cited:
- WO-A1-97/21339
- WO-A1-99/15000
- WO-A1-2005/011361
- US-A1- 2004 237 389

## Description

### Technical Field

The present invention relates to a container for plants, in particular trees and shrubs fit for being transplanted, and can be used in particular in the farming field.

### Background Art

It has been known that plants, such as trees and shrubs fit for being transplanted, are generally cultivated in suitable containers. Such plants can, in this way, grow faster than the ones growing in the free ground, they can be better looked after and, since roots are not damaged when plants are transplanted, transplantation results easy.

Different kinds of containers have been used so far for the housing of ground and roots of plants before the transplantation. For example, the first containers used for growing plants were terracotta, metallic or plastic pots, with holes for draining water on the bottom.

When a seed sprouts, the main root grows and goes downwards in order to give stability to the new plant and to ease the absorption of water and nutritious elements. The main root of some plants extends for few centimetres, while in other species it extends widely if soil conditions allow it.

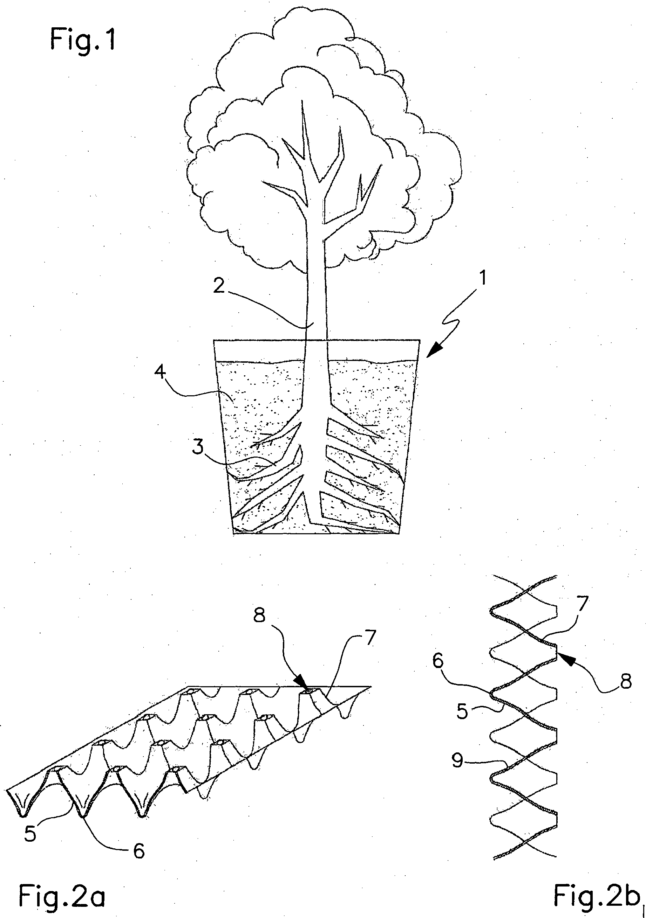

In figure 1 a conventional pot with smooth walls is shown. Container 1 is made of a truncated cone-shaped body for containing the plant 2 with roots 3 placed in the ground 4 or in another substance suitable for the growth. The main root grows in vertical direction until it reaches the bottom of the container, then it changes its direction because of the contact with the wall, creating a circular path around the wall which thwarts the growth.

Once the main root stops growing, the growing preponderance of its end stops too and lateral roots start growing. These are less influenced by the force of gravity, therefore they extend mainly in diagonal direction, quite inclined downwards. When such roots touch the pot wall, they bend and grow downwards until reaching the bottom of the pot, where they keep on growing in circular manner.

From secondary roots, further roots come up, called tertiary roots, which usually grow horizontally.

Plants, which roots grow downwards and accumulate on the pot bottom, as described above, suffer, because their roots do not assure a sufficient anchorage and the ends of roots lay deep in the ground where the airing is minor. Moreover roots directed downwards weave one another and, when grown-up, they create a reciprocal pressure which can thwart the normal absorption of water and other nutritious substances.

In order to avoid the spiral-shaped growth and the accumulation of roots on the bottom, containers with holes in smooth walls have been used. Lateral holes or openings cause the drying of the ends of the roots because of their contact with the air, mainly because the atmosphere cannot supply the moisture needed for the growth of the root. Such phenomenon produces a growth stop when the root extends next to an opening exposed to the air. This effect is similar to the one which occurs during the pruning and it stimulates the growth of lateral roots. The use of such containers reduces the rising of spiral-shaped roots, but does not prevent it, because some roots are not directly turned towards the openings but are diverted when they touch the inner wall of the pot and then continue their growth.

Other plants are placed in containers without a bottom, arranged on grids, where roots reaching the base of the container are cut off by the action of the air. The most part of the roots is straight and it ends on the bottom of such containers, nevertheless reducing the lateral anchorage of the plant. Moreover the necessity of placing the pots on grids makes such method complex and expensive.

Therefore, other containers providing a series of protuberances have been elaborated. One of these types has protuberances which alternatively protrude outside and inside the wall (Air Pot Garden (UK)). In figures 2a - 2b two views of this container are shown. The internal protuberances 5 end with a closed end 6 while the external protuberances 7 have an opening 8 on the top, so that, when the roots grow towards such openings, the ends are dried at the air exposure.

This known container has some notable drawbacks. Further to several tests, it has been noticed that the internal protuberances prevent a correct and homogeneous irrigation of the used substratum (soil, coir, etc.) next to the container walls, thus concentrating the water in the central zone. This phenomenon slows the growth of roots towards the external openings, because roots usually tend to grow in a wet area. The direct consequence is an unnatural extension of the plant with poor ramification.

Furthermore it has been noted that many roots tend to avoid the external openings, because the external protuberances 5 have the lower part 9 inclined upwards, that is opposite to the natural substantially downwards or horizontal direction of roots. The ends of roots which meet such surface 9 inclined upwards will mostly bend and grow far from them.

Then another kind of container has been devised, having only outwards protruding protuberances, with an opening on the top of the same (Root Maker (USA)).

US 2004/237389 discloses, for example, a container for plants comprising a sheet provided with a plurality of hollow protuberances, suitable to receive roots of the plant, which extend outwardly from the plane of the sheet. Each protuberance slopes downwardly when the sheet is positioned upright and it comprises a proximal opening that communicates with a distal opening. A centre of each proximal opening is positioned higher that a centre of the corresponding distal opening in order to provide a suitable pathway for the natural growth tendency of the plant roots.

These containers improve the homogeneity of the ground irrigation, but still have a notable drawback. As a matter of facts, roots which do not directly grow towards the external openings tend to bend and to grow in spirals around the container wall, since there are no internal protuberances able to prevent their spiral-shaped growth.

### Disclosure

The task of the present invention is that of solving the aforementioned problems, devising a container for plants which allows to avoid the spiral-shaped growth of roots.

Within such task, it is a further scope of the present invention that of providing a container for plants which aids the growth of secondary roots.

Another scope of the present invention is that of providing a container for plants which allows a homogeneous humidification in its inside.

A further object of the present invention is that of providing a container for plants having a simple conception and a surely reliable structure, as well as relative economic cost.

The cited scopes are attained, according to the present invention, by the container for plants, according to claim 1.

The container for plants is suitable to contain soil and roots of growing plants. The container comprises a lateral wall comprising at least one sheet which shapes a plane and a plurality of hollow protuberances which extend from the plane towards the outside of the container, and which are suitable to receive roots during the growth. Each external protuberance has a median axis which in use is inclined downwards.

The external protuberances are provided with an opening at their external end, in order to allow the growth interruption of roots.

In particular, external protuberances extend from a respective inner opening, made at the plane, the inner opening having a centre arranged in a higher position with respect to the centre of the external opening.

The sheet is preferably provided with a plurality of internal protuberances having the function of diverting elements. Such internal protuberances have a closed end, and extend from the sheet plane towards the inside of the container, so as to divert roots towards the external protuberances.

Preferably the diverting elements have an extended shape and a substantially triangular transversal section. More in detail, the diverting elements extend from a respective internal opening of extended shape comprised in the sheet plane and they converge towards a respective extended closed end.

The diverting elements are arranged alternating with the protuberances and close to them so as to shape a grid, in order to minimize the presence of flat zones in the lateral wall of the container.

### Description of Drawings

Details of the invention shall be more apparent from the detailed description of a preferred embodiment of the container for plants according to the invention, illustrated for indicative purposes in the attached drawings, wherein:
figure 1 shows a lateral and partially section view of a container for plants belonging to the prior art;
figures 2a and 2b respectively show a perspective view and a section view of a detail of a container for plants, belonging to the prior art;
figures 3a and 3b respectively show a front view and a section view of a detail of the container for plants object of the invention according to a first embodiment;
figures 4a and 4b show respectively a front view and a section view of a detail of the container according to a second embodiment;
figures 5a and 5b respectively show a front view and a section view of a detail of the container according to a third embodiment;
figure 6 shows a section view of a further embodiment of the container according to the invention;
figure 7a shows a way for erecting the container for plants;
figure 7b shows a front view of a detail of the container according to another embodiment;
figure 8 shows a bottom element of the container according to the invention;
figure 8a shows a section view of said bottom element in mounting position;
figure 9 shows a perspective view of an embodiment of the container according to the invention;
figures 10 and 11 show respectively a front view of a portion of the container according to two preferred embodiments;
figures 10a, 10b and 11a, 11b show respective section views according to the planes A-A and B-B of figures 10 and 11;
figure 10c shows an axonometric view of the detail of figure 10;
figures 12 and 12a respectively show a front view and a section view of a base of the container for plants.

### Best Mode

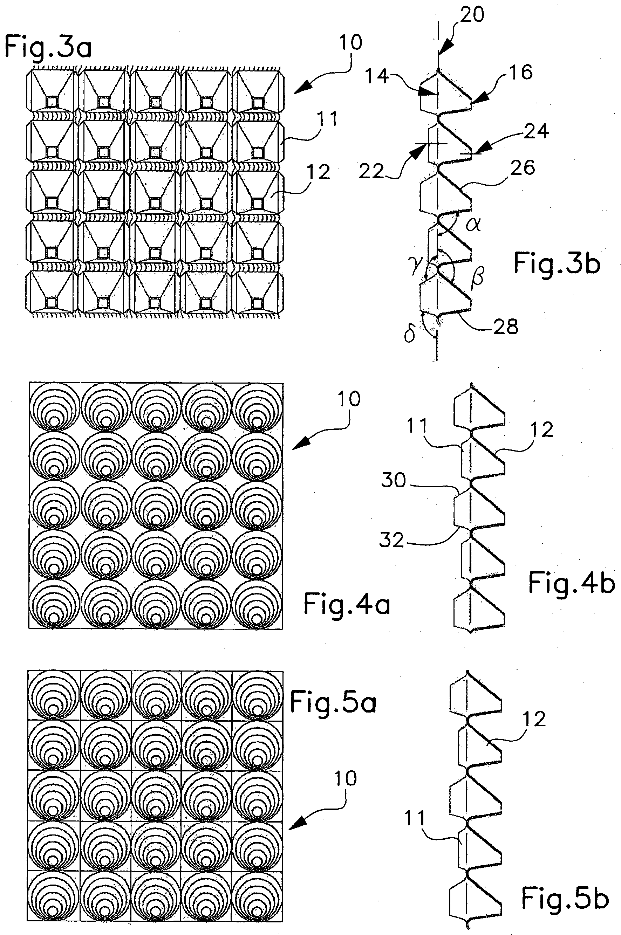

With particular reference to figures 3 - 10, the container for plants, indicated for more clarity in its entirety with 1, comprises a sheet 10 which shapes a plane 20. The sheet 10 is made of flexible material. According to a preferred embodiment, the sheet 10 is made of high density polyethylene, but it is possible to provide any type of material, such as for example plastic, aluminium, thin glass fibre or other flexible, robust and durable materials, which allow to obtain a sheet 10 suitable for being shaped by hand. It is as well suitable that the sheet 10 is flat and of uniform thickness, so as to obtain a container 1 of regular shape.

A series of internal protuberances 11 and external protuberances 12 extend from the opposite sides of the plane 20 of the sheet 10.

More precisely, the sheet 10 has, at a first side, a plurality of hollow protuberances 12, uniformly spread on the surface of said first side. Preferably such plurality of protuberances 12 is obtained through moulding.

The protuberances 12 have each a same pre-established protrusion from the plane 20 of the sheet 10. According to a preferred embodiment, the protrusion of the protuberances 12 is substantially of 2 cm, but it is possible to provide any other value according to the kind of plants to be placed in the container 1.

It is important to observe that in use, that is when the container for plants is erected, the above mentioned plurality of protuberances 12 is arranged on the sheet side which is turned outwards with respect to the container.

More precisely, each of said external protuberances 12 has a base opening 14 comprised in the plane 20 of the sheet 10 and having a respective first centre 22. According to a preferred embodiment, the base opening 14 has square shape, as it is possible to notice in figures 3a, 5a, 7a-b and 10a-c. Nevertheless, it is possible to provide that such base opening 14 has a different shape, for example a circular shape as it is shown in figure 4a, or a rectangular, polygonal, elliptical or irregular one as well.

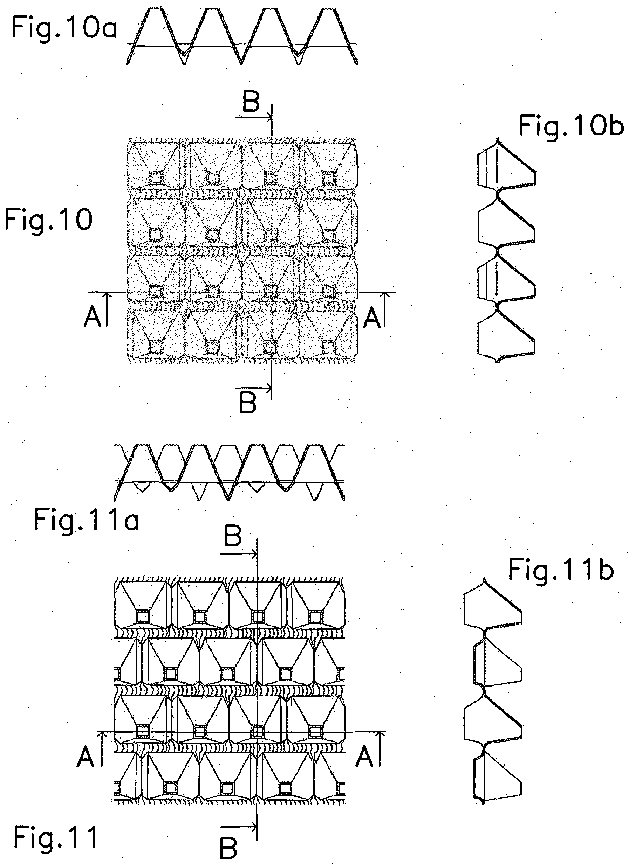

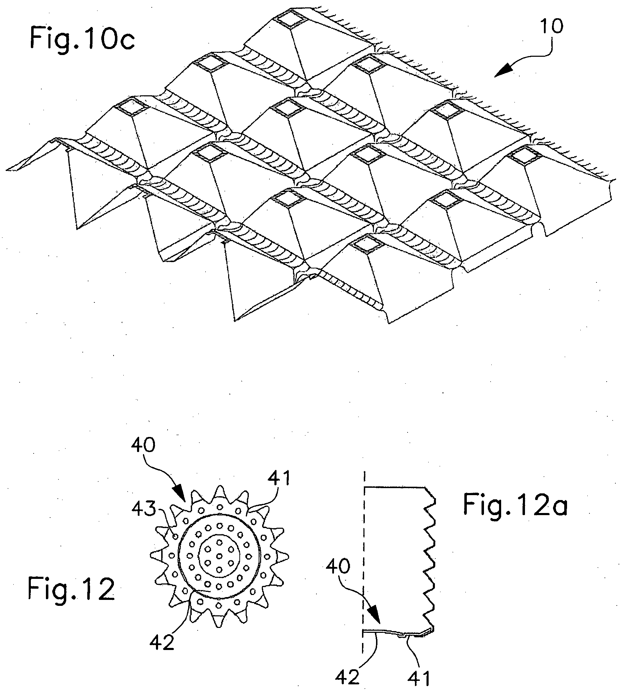

It is suitable that the external protuberances 12 are arranged very close to one another, so as to minimize the space between adjacent protuberances 12 thus reducing the presence of flat zones on the plane 20 of the sheet 10. The whole of the external protuberances 12 shapes, in this way, a grid. According to a preferred embodiment, the protuberances 12 are aligned according to two directions orthogonal to each other, as illustrated for example in figures 3 - 5 or 10a. Anyway it is possible to provide that such external protuberances 12 are aligned according to a first direction and staggered according to a second direction orthogonal with respect to the first direction, as it is shown as an example in figure 10b.

Each external protuberance 12 extends from the respective base opening 14 converging towards a respective end, having a respective second centre 24. According to a preferred embodiment, such end comprises an opening 16 having reduced size with respect to the size of the base opening 12 and being substantially parallel to it. Such opening 16 enables the growth interruption of the roots, that is the drying of the end of roots as they come in touch with the air. Moreover, it is possible to provide that such end is closed, for example of rounded, pointed or flat shape.

As already mentioned for the base opening 14, the end of each protuberance can have square, circular, rectangular, polygonal, elliptical or irregular shape. According to a preferred embodiment, shown in figure 3a, both the base opening 14 and the end opening 16 have square shape. It is alternatively possible to provide that the base opening 14 and the end opening 16 have circular shape (figure 4a). As an alternative, it is possible to provide that the base opening 14 and the end opening 16 have different shapes, as it is shown for example in figure 5a, where the protuberances 12 have a square base opening 14 and a circular end opening 16.

According to the shape of the base opening 14 and of the section profile of the ends, the external protuberances 12 can have a truncated cone shape or a truncated pyramid shape, with the walls being planar or curved. Generally, the protuberances 12 have a shape converging from the base opening 14 towards the end, so as to aid the natural path of the plant roots.

According to the present invention, the external protuberances 12 have each a median axis inclined according to one same pre-established direction so as to result parallel to each other. More in detail, for each protuberance 12 the first centre 22 of the base opening 14 and the second centre 24 of the end are aligned according to a direction inclined with respect to a direction perpendicular to the plane 20 of the sheet 10 which crosses the above mentioned first centre 22 (see figures 3b, 4b and 5b).

In particular, the section profile of the protuberances 12, according to the vertical median plane, comprises a first projection 28 and a second projection 26. Preferably the first projection 28 is inclined towards the inside of the protuberance 12, shaping with the plane 20 of the sheet 10 an angle α slightly major or equal to 90°, with respect to the external of the same protuberance 12. In the same way, the second projection 26 is inclined towards the inside of the protuberance 12 and shapes with the plane 20 of the sheet 10 an angle β preferably comprised between 110° and 150°, with respect to the external of the same protuberance 12, as it is shown in figures 3b, 4b and 5b. In a preferred embodiment, the angle α is quite major than 90° and the angle β is of 135°.

It is important to note that in use, that is when the container for plants is erected, the sheet 10 is oriented so that the protuberances 12 have their median axis inclined downwards, so as to create an obliged path similar to the plant roots natural one, that is downwards and outwards. In this way the natural geotropism, the effect of the force of gravity on plants which directs roots downwards, is respected.

The sheet 10 is also provided with a plurality of internal protuberances 11 having the function of diverting elements. Such diverting elements 11 extend at a second side, opposite to the above mentioned first side of the sheet 10. The diverting elements 11 are preferably homogeneously distributed on the surface of the second side of the sheet 10 and they are alternated with the base openings 14 of the protuberances 12. Such diverting elements 11 are suitable to divert towards the inside of the hollow protuberances 12 any possible roots of the plant which do not do it by themselves.

The diverting elements 11 consist in a plurality of second hollow protuberances obtained through moulding, which extend from a respective base opening comprised in the plane 20 of the sheet 10, of preferably elongated shape, towards a closed end. Preferably, said base openings have a rectangular shape and the diverting elements have a profile which transversal section is substantially triangular (see in particular figures 10a and 10b).

It is to be noticed that the diverting elements 11 protrude from the plane 20 of the sheet 20 less than the external protuberances 12. It is as well important to observe that the diverting elements 11 can all have the same protrusion from the plane 20 of the sheet 10, or they can have different protrusions for creating more discontinuity in the second side of the sheet 10. According to a preferred embodiment, the diverting elements 11 have a protrusion variable between 0,5 and 1 cm, and are arranged so as to have different lengths in alternated manner.

More in detail, the diverting elements 11 are preferably arranged parallel to each other, and are oriented substantially orthogonally to the plane 20 of the sheet 10 and parallel to the above mentioned pre-established direction, according which the median axes of the protuberances 12 are inclined.

In longitudinal section, each diverting element 11 has a first transversal side 30 and a second transversal side 32, both inclined with respect to the plane 20 of the sheet 10. The first transversal side 30 shapes with the plane 20, on the outside of the respective diverting element 11, an angle γ comprised between 120° and 150°, preferably equal to 140°. The second transversal side 32 shapes with the plane 20, on the outside of the respective diverting element 11, a angle δ slightly major than 90°.

It is suitable that the diverting elements 11 and the protuberances 12 have the respective base openings arranged adjacent between them so as to minimize the presence of flat zones on the sheet 10.

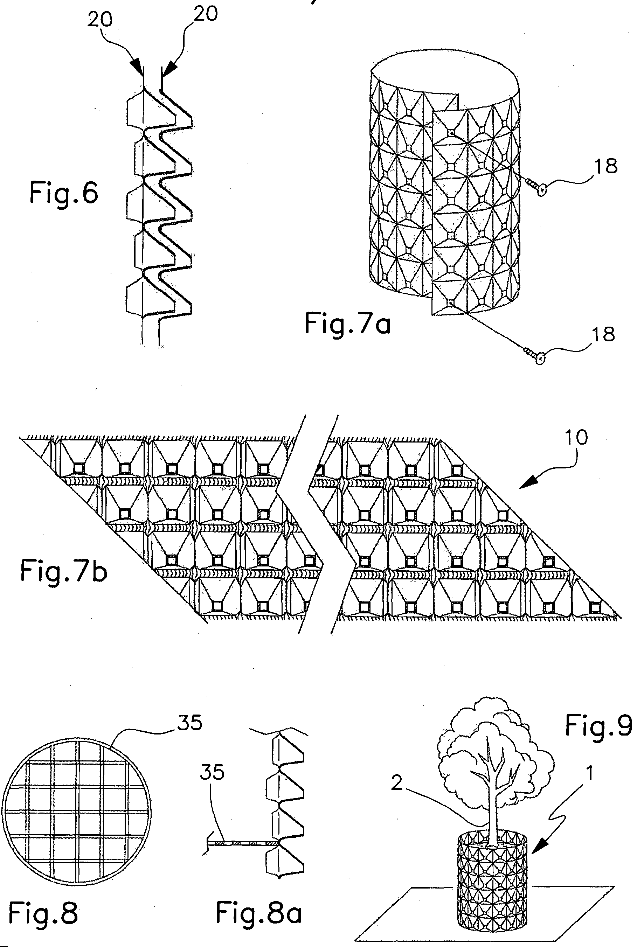

Preferably the container 1 according to the invention is provided as well with closure members 18 suitable to perform the closing of the sheet 10 to accomplish the erection of the container. Such closure members 18 can comprise suitable screw means (figure 7a), made for example of plastic or of other material, or suitably shaped plugs, rivets, pins, staples, hook means or as well joints or hooks.

It is also possible to provide the container with a fit bottom element or base 35, suitable to close the container at the bottom and meanwhile to act as a support for the plant and for the soil in which it is planted. Suitably it is possible to provide such bottom element with a plurality of holes having a size suitable for allowing the drainage of the exceeding water (figures 8 and 8a). The bottom element can consist in a pierced sheet or in a grid, for example of plastic material.

The construction and the use of the container for plants is easy to understand from the preceding description.

For the construction of the container, firstly a sheet 10 of suitable moulded flexible material is prearranged, comprising a plurality of external hollow protuberances 12 on a first side. As described before, all the protuberances 12 have the respective median axis inclined according to a same pre-established direction so as to result parallel to one another.

It is to be noticed that it is possible to provide that the sheet 10 is obtained from another moulded sheet of greater size, from which it is possible to obtain other sheets 10 for making other containers.

It important to note as well that it is appropriate to choose the size of the external protuberances 12 according to the shape to be given to the container, that is according to the plant to be inserted in. For example, for containers having a volume comprised between 1 and 5 litres, external protuberances 12 with sides of substantially 2 cm are suitable. For containers having a greater volume, it is possible to provide moulded sheets having protuberances 12 with sides of substantially 3 cm.

If protuberances 12 with end openings 16 are required, it is possible that such opening 16 is created during the moulding step of the protuberances 12. As an alternative, it is possible firstly to create closed protuberances 12 and later to create the openings 16 by cutting the edges.

The prearranged sheet 10 can have rectangular shape (figure 7a). As an alternative it is possible to prearrange a sheet 10 of rhomboidal shape (figure 7b) which offers the advantage of being easily foldable and of being more solid upon folding.

Subsequently, the prearranged sheet 10 is folded or bended for shaping the lateral wall of the container. At such point, it is possible to give any shape to the lateral wall of the container, for example a square, rectangular or irregular shape. It is preferable to bend the sheet 10 so as to obtain a cylindrical lateral wall, as illustrated for example in figure 7a or9. Such shape, besides being easier to obtain, has the advantage of being more fit for the plant growth, because it is symmetrical.

It is essential to mention that the sheet 10 must be folded so that the external protuberances 12 extend towards the outside of the container. It is as much essential that the pre-established direction, according which the median axes of the protuberances 12 are inclined, results oriented downwards. In such way, the median vertical section profile of the protuberances 12 has a lower projection 28 slightly inclined with respect to the direction perpendicular to the plane 20 of the sheet 10. Preferably the angle α between the above mentioned lower projection 28 and the plane 20 of the sheet 10 is slightly major than 90°, with respect to the outside of the same protuberance 12.

If the presence of the internal protuberances of diverting elements 11 is provided, they will be arranged on the internal side of the lateral wall of the container. It is useful to note that the presence of the diverting elements 11 inside the container, thanks to their extended shape, assure an optimal irrigation and therefore grants a homogeneous moisture of the soil.

In case a bottom element is provided, it is inserted during the bending of the sheet 10, so as to result blocked for example between the possible diverting elements 11. Obviously, the bottom element must have a shape which is fit for the shape of the erecting container. For example, for a cylindrical-shaped container a disc bottom element is suitable, as it is shown in figure 8.

After the bending of the sheet 10, the container is closed, by overlapping and fixing to each other the lateral edges of the same sheet 10. It is to be noted that the overlapping of the edges is helped by the fact that the overlapped protuberances 12 act as joints (figures 6 and 7a). The fixing step is preferably made through closure members 18, in particular through suitable screw means, but it is possible to provide that the fixing is made by means of gluing or welding of the same edges. Nevertheless, in this case it will not be easy to reuse the sheet 10, because for opening it, it will be necessary to cut it.

Once being closed, the container is placed on a surface impenetrable for roots and is filled with soil and with the same plant.

During the growth of the plant, roots expand in the soil towards the lateral wall of the container 1. Then the ends of roots grow towards the inside of the protuberances 12, independently or with the aid of diverting elements 11 placed on the internal surface of the lateral wall, gradually arriving to the ends of the external protuberances 12.

According to a preferred embodiment, the end of the protuberances is open. The ends of the roots therefore get in contact with the air and stop their growth, forcing the following growth of secondary roots.

When roots have been extended to substantially all the zones of the soil being inside the container, it is necessary to transplant the plant.

According to a preferred embodiment, the closure members 18 can be open so as to allow the opening of the container 1. The plant, together with its soil, is transplanted into another bigger container, which is then filled with further soil, or directly into the ground. The cited other container can be obtained from a sheet 10 differently moulded, of greater size. As an alternative, it is possible to obtain the other container by reusing the already used sheet 10 and adding a second sheet 10.

It this last case, further sheets 10 are fixed through one of their edges to one edge of the already used sheet 10, through further closure means 18. The further sheets 10 can be horizontally added, in order to increase the diameter of the container, or vertically added, in order to increase its height.

Moreover it is possible to provide different colours for the container according to different uses. For example, a fair coloured material entails, in hot environments, a reduced heating of the container, and consequently a reduced water need. On the contrary, a dark container, in cold environments, allows to store heat and aids the development of the plant. Other colours can be used for aesthetical purposes.

The container for plants attains the scope of avoiding the spiral-shaped growth of the roots of the plants.

Such result is obtained substantially thanks to the inventive idea of providing, on the external wall, a plurality of hollow protuberances 12 having their median axis inclined downwards. Such inclination enables the roots to develop in a substantially natural manner, following at least partially the effect of the force of gravity.

A feature of the container for plants is that flat portions of the lateral wall are strongly reduced, by arranging the external protuberances 12 and the diverting elements 11 very close to one another. In this way the spiral-shaped growth of the roots is better avoided.

Another feature of the container object of the invention is that of providing protuberances 12 with open ends 16, in order to stop the growth of the roots and to aid the growth of secondary roots.

A further advantage of the container according to the invention is that of having internal protuberances 11 having the function of diverting elements which have an elongated shape on the internal side of the lateral wall. Such diverting elements 11 divert roots towards the external hollow protuberances 12 and at the same time they optimize irrigation inside the soil for granting a homogeneous moisture.

The container for plants described for indicative purpose is susceptible of numerous modifications and variants according to the different exigencies.

The container can be provided for example with a pierced base 40, comprising a fixed external part 41 and a removable internal part 42, as it is shown in figures 11, 12. The external fixed part 41, made of flexible material, has a daisy-shaped profile and is suitable to join, during the erecting step, with the hollows of the external protuberances of the container. The internal removable part 42 results arranged in the centre of the external fixed part. The external and internal parts 41, 42 of the base have an ordered series of holes 43, suitably spread, for the draining of water.

It is particularly important to underline that the internal removable part 42 of the base 40 allows an easier extraction of the plant, for example in case of transplantation, without disassembling the container. As a matter of facts, such removable part allows to push the plant out by hand or by mechanical means, up from the bottom, making it slide along the internal protuberances of the container.

In practice, the embodiment of the invention, the materials used, as well as the shape and dimensions, may vary depending on the requirements.

Should the technical characteristics mentioned in each claim be followed by reference signs, such reference signs were included strictly with the aim of enhancing the understanding the claims and hence they shall not be deemed restrictive in any manner whatsoever on the scope of each element identified for exemplifying purposes by such reference signs.

## Claims

1. Container for plants, suitable to contain the soil for growing the plants and the roots of the plants, comprising a lateral wall comprising at least one sheet (10), which shapes a plane (20) and a plurality of hollow external protuberances (12), which extend from said plane (20) towards the outside of said container and are suitable to receive said roots, each of said external protuberances (12) having in use a median axis inclined downwards;
**characterized in that** said sheet (10) is provided with a plurality of diverting elements (11) having an elongated shape with a closed end, which extend from said plane (20) towards the inside of said container less than said external protuberances (12) extend from the same plane (20) towards the outside, said diverting elements (11) being suitable to divert said roots towards said external protuberances (12) and to optimize irrigation inside said soil so as to grant a homogeneous moisture.

2. Container according to claim 1, **characterized in that** said external protuberances (12) are provided with an opening (16) at their external end, so as to allow the interruption of the growth of said roots.

3. Container according to claim 2, **characterized in that** said external protuberances (12) extend from a respective internal opening (14), made at said plane (20), said internal opening (14) having a centre (22) arranged in a position higher than the position of the centre of said external opening (16).

4. Container according to claim 1, **characterized in that** said diverting elements (11) have a profile having a substantially triangular transversal section.

5. Container according to claim 1 or 4, **characterized in that** said diverting elements (11) consist in secondary hollow protuberances which extend from a respective internal opening of extended shape comprised in said plane (20) of the sheet (10) and which converge towards a respective said closed end.

6. Container according to claim 1 or 5, **characterized in that** said diverting elements (11) are arranged alternated with said protuberances (12).

7. Container according to one of the previous claims, **characterized in that** said external protuberances (12) shape a grid for minimizing the presence of flat zones on said sheet (10).

8. Container according to claim 2, **characterized in that** the vertical median section of said external protuberances (12) has a first projection (28), lower in use, which shapes an angle (α) substantially equal to or slightly major than 90° with said plane (20) of the sheet (10) at the outside of the respective protuberance (12).

9. Container according to one of the previous claims, **characterized in that** said sheet (10) is of flexible material.

10. Container according to one of the previous claims, **characterized in that** said sheet (10) is of rhomboidal shape.

11. Container according to claim 9 or 10, **characterized in that** said sheet (10) is folded and closed through the overlapping of two lateral edges.

12. Container according to claim 11, **characterized in that** it comprises closure means (18) suitable to close said sheet (10) by jointing said overlapped edges.

13. Container according to one of the previous claims, **characterized in that** it comprises a pierced base (40) comprising an external fixed part (41), made of flexible material and suitable to wedge into the hollows of said external protuberances (12) of the sheet (10), and an internal removable part (42), arranged at the centre of said external fixed part (41).

## Patentansprüche

1. Behälter zum Züchten von Pflanzen, der geeignet ist, die Erde für das Züchten und die Wurzeln der Pflanzen aufzunehmen, und eine Seitenwand umfasst, die mindestens ein Blatt (10) umfasst, das eine Ebene (20) und eine Mehrzahl an hohlen Ausstülpungen (12) bildet, die sich von genannter Ebene (20) nach außen des genannten Behälters ausdehnen und geeignet sind, genannte Wurzeln aufzunehmen, wobei jede der genannten äußeren Ausstülpungen (12) bei der Verwendung eine nach unten geneigte Mittelachse umfasst;
**dadurch gekennzeichnet, dass** genanntes Blatt (10) mit einer Mehrzahl an Umleitungselementen (11) versehen ist, die eine längliche Form mit einem geschlossenen Ende haben und sich von genannter Ebene (20) weniger nach innen des genannten Behälters ausdehnen, als sich die genannten äußeren Ausstülpungen (12) von der selben Ebene (20) nach außen ausdehnen, wobei genannte Umleitungselemente (11) geeignet sind, genannte Wurzeln in Richtung der genannten äußeren Ausstülpungen (12) umzuleiten und die Bewässerung innerhalb der genannten Erde zu optimieren, um eine gleichmäßige Feuchtigkeit zu garantieren.

2. Behälter nach Anspruch 1, **dadurch gekennzeichnet, dass** genannte äußere Ausstülpungen (12) eine Öffnung (16) am äußeren Ende aufweisen, um die Unterbrechung des Wachstums der Wurzeln zu ermöglichen.

3. Behälter nach Anspruch 2, **dadurch gekennzeichnet, dass** sich genannte äußere Ausstülpungen (12) von einer jeweiligen Innenöffnung (14) ausdehnen, die an der genannten Ebene (20) angebracht wurde, wobei genannte Innenöffnung (14) einen Mittelpunkt (22) aufweist, der in einer höheren Position als der Mittelpunkt der genannten äußeren Öffnung (16) liegt.

4. Behälter nach Anspruch 1, **dadurch gekennzeichnet, dass** genannte Umleitungselemente (11) ein Profil mit im Wesentlichen dreieckigem Querschnitt haben.

5. Behälter nach Anspruch 1 oder 4, **dadurch gekennzeichnet, dass** genannte Umleitungselemente (11) in sekundären hohlen Ausstülpungen bestehen, die sich von einer jeweiligen auf genannter Ebene (20) des Blattes (10) enthaltenen Innenöffnung mit länglicher Form ausdehnen und in Richtung eines jeweiligen genannten geschlossenen Endes zusammenlaufen.

6. Behälter nach Anspruch 1 oder 5, **dadurch gekennzeichnet, dass** genannte Umleitungselemente (11) abwechselnd mit genannten Ausstülpungen angeordnet sind (12).

7. Behälter nach einem der vorangehenden Ansprüche, **dadurch gekennzeichnet, dass** die genannten äußeren Ausstülpungen (12) ein Gitter bilden, um die Anwesenheit von flachen Bereichen des genannten Blattes (10) gering zu halten.

8. Behälter nach Anspruch 2, **dadurch gekennzeichnet, dass** der mittlere vertikale Abschnitt genannter äußerer Ausstülpungen (12) einen ersten, während der Verwendung unten befindlichen Vorsprung (28) aufweist, der einen Winkel (α) zu genannter Ebene (20) des Blattes (10) an der Außenseite der jeweiligen Ausstülpung (12) bildet, der im Wesentlichen 90° beträgt oder etwas größer ist.

9. Behälter nach einem beliebigen der vorangehenden Ansprüche, **dadurch gekennzeichnet, dass** genanntes Blatt (10) aus flexiblem Material ist.

10. Behälter nach einem beliebigen der vorangehenden Ansprüche, **dadurch gekennzeichnet, dass** genanntes Blatt (10) rautenförmig ist.

11. Behälter nach Anspruch 9 oder 10, **dadurch gekennzeichnet, dass** genanntes Blatt (10) gefaltet und durch die Überlagerung von zwei Seitenrändern geschlossen wird.

12. Behälter nach Anspruch 11, **dadurch gekennzeichnet, dass** er außerdem Schließorgane (18) umfasst, die geeignet sind, genanntes Blatt (10) durch die Verbindung genannter überlagerter Seitenränder zu schließen.

13. Behälter nach einem beliebigen der vorangehenden Ansprüche, **dadurch gekennzeichnet, dass** er eine perforierte Basis (40), die einen aus flexiblem Material gefertigten externen Festteil (41) umfasst, der geeignet ist, in den Hohlräumen genannter äußerer Ausstülpungen (12) des Blattes (10) geklemmt zu werden, und einen herausnehmbaren Innenteil (42), der im Mittelpunkt des genannten externen Festteils (41) angeordnet ist, umfasst.

## Revendications

1. Conteneur pour la croissance des plantes, apte à contenir le terrain de croissance et les racines des plantes, comprenant une paroi latérale comprenant au moins une feuille (10) qui définit un plan (20) et une pluralité de protubérances (12) creuses, qui s'étendent dudit plan (20) vers l'extérieur dudit conteneur et sont aptes à recevoir lesdites racines, chacune desdites protubérances externes (12) présentant en cours d'utilisation un axe médian incliné vers le bas ;
**caractérisé en ce que** ladite feuille (10) est pourvue de plusieurs éléments de déviation (11) ayant une forme allongée avec une extrémité fermée, qui s'étendent dudit plan (20) vers l'intérieur dudit conteneur moins que lesdites protubérances externes (12) s'étendent du même plan (20) vers l'extérieur, lesdits éléments de déviation (11) étant aptes à dévier lesdites racines vers lesdites protubérances externes (12) et à optimiser l'irrigation à l'intérieur dudit terrain de manière à garantir une humidité homogène.

2. Conteneur selon la revendication 1, **caractérisé en ce que** lesdites protubérances externes (12) sont pourvues d'une ouverture (16) à leur extrémité extérieure, de manière à permettre l'interruption de la croissance desdites racines.

3. Conteneur selon la revendication 2, **caractérisé en ce que** lesdites protubérances externes s'étendent d'une respective ouverture intérieure (14), pratiquée au niveau dudit plan (20), ladite ouverture intérieure (14) présentant un centre (22) disposé dans une position plus élevée par rapport au centre de ladite ouverture (16) extérieure.

4. Conteneur selon la revendication 1, **caractérisé en ce que** lesdits éléments de déviation (11) ont un profil à section transversale sensiblement triangulaire.

5. Conteneur selon la revendication 1 ou 4, **caractérisé en ce que** lesdits éléments de déviation (11) sont constitués des protubérances creuses secondaires qui s'étendent d'une respective ouverture intérieure de forme allongée comprise dans ledit plan (20) de la feuille (10) et qui convergent vers une respective dite extrémité fermée.

6. Conteneur selon la revendication 1 ou 5, **caractérisé en ce que** lesdits éléments de déviation (11) sont disposés de manière alternée avec lesdites protubérances (12).

7. Conteneur selon l'une des revendications précédentes, **caractérisé en ce que** lesdites protubérances externes (12) conforment un réticule pour minimiser la présence de zones plates de ladite feuille (10).

8. Conteneur selon la revendication 2, **caractérisé en ce que** la section verticale médiane desdites protubérances externes (12) présente une première saillie (28), en cours d'utilisation inférieure, qui conforme un angle (α) sensiblement égal ou légèrement supérieur à 90° avec ledit plan (20) de la feuille (10) à l'extérieur de la protubérance respective (12).

9. Conteneur selon l'une quelconque des revendications précédentes, **caractérisé en ce que** ladite feuille (10) est en matériau flexible.

10. Conteneur selon l'une quelconque des revendications précédentes, **caractérisé en ce que** ladite feuille (10) est de forme rhomboïdale.

11. Conteneur selon la revendication 9 ou 10, **caractérisé en ce que** ladite feuille (10) est pliée et fermée par superposition de deux bords latéraux.

12. Conteneur selon la revendication 11, **caractérisé en ce qu'il** comprend aussi des organes de fermeture (18) aptes à fermer ladite feuille (10) en joignant lesdits bords latéraux superposés.

13. Conteneur selon l'une quelconque des revendications précédentes, **caractérisé en ce qu'**il comprend une base percée (40) comprenant une partie externe (41) fixe, réalisée dans un matériau flexible et apte à s'encastrer dans les cavités desdites protubérances externes (12) de la feuille (10), et une partie intérieure (42) amovible, placée au centre de ladite partie externe (41) fixe.
